# EUROPÄISCHE PATENTSCHRIFT

(11) **EP 1 617 187 B1**
(45) Veröffentlichungstag und Bekanntmachung des Hinweises auf die Patenterteilung: **20.06.2012**
(21) Anmeldenummer: 05014914.5
(22) Anmeldetag: 09.07.2005
(51) Int. Cl.: G01F 15/14, G01F 15/18

(54) **Sensorträger für einen Durchflussmesser**
Sensor support for a flowmeter
Support de capteur pour un capteur de débit

(30) Priorität: 13.07.2004 DE 202004010954 U
(43) Veröffentlichungstag der Anmeldung: 18.01.2006
(73) Patentinhaber: DIGMESA AG, 2563 Ipsach (CH)
(72) Erfinder: Plüss, Heinz, 3322 Schönbühl (CH)
(74) Vertreter: Lempert, Jost

(56) Entgegenhaltungen:
- EP-A2- 0 491 246
- WO-A2-2004/081526
- DE-A1- 10 111 993
- DE-U1- 8 411 680
- DE-U1- 29 614 076
- US-B1- 6 487 919

## Beschreibung

Die Erfindung betrifft einen Sensorträger mit einem Deckteil für einen Durchflussmesser, nach dem Oberbegriff des Anspruchs 1 sowie ein Verfahren zum Herstellen eines Sensorträgers für einen Durchflussmesser nach dem Oberbegriff des Anspruchs 5.

Ein gattungsgemäßer Sensorträger ist beispielsweise aus der DE 296 14 076 U1 bekannt. Er weist ein Deckteil für einen Durchflussmesser auf, welches mit einem Unterteil des Durchflussmessers durch Bajonettverschlüsse verbindbar ist. Das Deckteil trägt einen Sensor mit Verbindungslitzen, die in elektrischem Kontakt mit in einem Steckerteil gehaltenen Anschlussstiften stehen.

Es besteht die Gefahr, dass zwischen Deckteil und Steckerteil Feuchtigkeit in den Bereich des Sensors sowie der mit diesen verbundenen Verbindungslitzen gelangt und hierdurch zwischen den Litzen eine Kurschlussbrücke bewirkt, die zum Ausfall oder zur Verschlechterung der Funktionsfähigkeit des Durchflussmessers führen kann.

Die Druckschrift EP 0491246 A2 beschreibt einen Volumensensor für Flüssigkeiten mit einer Messkammer in der im Außeneingriff runde geradverzahnte Messwerkräder auf feststehenden Achsen gelagert sind. Die Vorrichtung weist innerhalb der Messkammer eine Bohrung auf, in welchem ein Differentialfeldplattenfühler als Sensor angeordnet ist, der durch eine druckfeste Platte zum Inneren der Messkammer isoliert ist. Der Zwischenraum zwischen der Bohrung und der Platte ist mit einer starren Vergussmasse ausgefüllt.

Die WO 2004/081526 offenbart eine Vorrichtung für eine Analyse von sehr kleinen Flüssigkeitsdurchflüssen mit einem Gehäuse 1, mit einem Ein- bzw. Ausgang, welche eine Fluidverbindung aufweisen. Das Gehäuse ist nach oben hin offen ausgebildet und zeigt eine Vertiefung im Innenbereich des Gehäuses. Ein Sensor kann in die Vertiefung eingesetzt werden, wobei der Innenbereich des Gehäuses mit einem adhäsiven bzw. plastischen Material ausfüllbar ist, um den Sensor an seinem Platz zu befestigen.

Hierbei ist nachteilig, dass durch Temperaturschwankungen verursachte Ausdehnungsänderungen der Vergussmasse Krafteinwirkungen auf die Verbindungslitzen auftreten, die zu Kurzschlüssen und einer Verschlechterung der Funktionalität des Sensors führen kann.

Der Erfindung liegt die Aufgabe zugrunde, bei einfacher Ausbildung eines gattungsgemäßen Sensorträgers bei Ausschluss der Gefahr eines Eindringens von Feuchtigkeit und der Bildung von Kurzschlussbrücken zwischen den Verbindungslitzen des Sensors.

Erfindungsgemäß wird die genannte Aufgabe bei einem Sensorträger der eingangs genannten Art durch einen gattungsgemäßen Sensorträger mit den Merkmalen des Anspruchs 1 gelöst. Zur Lösung der erfindungsgemäßen Aufgabe sieht die Erfindung bei einem gattungsgemäßen Verfahren die Merkmale des Anspruchs 5 vor.

Durch die zwischen dem relevanten Bereich des Deckteils und dem diesen Bereich überdeckenden Steckerteil vorgesehene elektrisch isolierende elastische Masse wird eine zuverlässige Isolierung und Abdichtung insbesondere der Verbindungslitzen des Sensors, aber auch desselben selbst sowie des Bereichs der Anschlussstifte innerhalb des Steckerteils bzw. des Deckteils geschaffen. In bevorzugter Ausgestaltung ist dabei erfindungsgemäß vorgesehen, dass der Zwischenraum zwischen Steckerteil und Deckteil vollständig durch die elektrisch isolierende elastische Masse ausgefüllt ist. Eine Weiterbildung der Erfindung sieht vor, dass die elektrisch isolierende elastische Masse in fließfähiger oder zähflüssiger Form aufgebracht und ausgehärtet ist und insbesondere, dass die elektrisch isolierende elastische Masse Silikon ist. Weiterhin sieht die Erfindung vor, dass Deckteil und Steckerteil in formschlüssigem Kontakt miteinander gebracht werden und/oder dass als elektrisch isolierende Masse Silikon in fließfähiger oder zähflüssiger Form den vom Steckerteil überdeckten Bereich des Deckteils oder auf die dem Deckteil zugewandte Seite des Steckerteils aufgebracht wird.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:

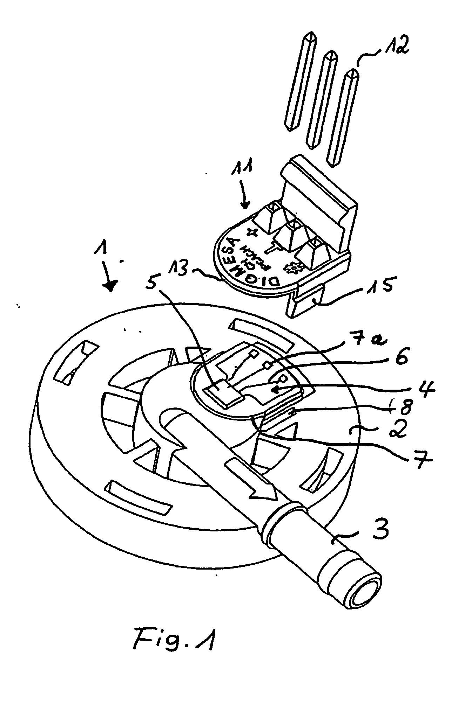

- **Fig.** 1: eine Explosionsdarstellung des erfindungs- gemäßen Sensorträgers in Form eines Deck- teils für einen Durchflussmesser;
- **Fig. 2**: eine Draufsicht auf den erfindungsgemäßen Sensorträger im fertigen Zustand; und
- **Fig. 3**: eine Schnittansicht entlang der Linie III-III durch den Sensorträger der Fig. 2.

Bei dem in den Figuren dargestellten Sensorträger 1 handelt es sich um ein Deckteil für einen Durchflussmesser, wie er als solcher beispielsweise in der DE 296 14 076 U1 dargestellt ist.

Der erfindungsgemäße Sensorträger 1 weist ein Deckteil 2 auf, welches über - nicht näher dargestellte - Bajonettverschlüsse - mit einem Unterteil des Durchflussmessers (nicht dargestellt) verbindbar ist. Am Deckteil 2 ist ein Fluidanschluss 3, im dargestellten Ausführungsbeispiel die Fluidfortführung ausgebildet. Weiterhin findet sich am Deckteil ein Aufnahmebereich 4 für einen Sensor 5, von dem Verbindungslitzen 6 zu dem Deckteil 2 ausgebildeten Vertiefungen geführt sind. Der Anschlussbereich 4 ist durch eine Nut 7 umgeben. Ein mit dem Deckteil 2 verbindbares Steckerteil 11 des erfindungsgemäßen Sensorträgers 1 trägt im dargestellten Ausführungsbeispiel Anschlussstifte 12, die nach Verbinden des Steckerteils 11 mit dem Deckteil 2 innerhalb der Vertiefungen 7a in elektrisch leitenden Kontakt mit den Enden der Verbindungslitzen 6 gelangen.

Das Steckerteil 11 weist eine Nase 13 auf, die zum Eingreifen in eine Nut 7 des Deckteils 2 ausgebildet ist. Nach Zusammenstecken von Deckteil 2 und Steckerteil 11 werden diese über in Vertiefungen 8 des Deckteils 2 ein- und hintergreifende Nasen 15 des Steckerteils 11 aneinander gehalten.

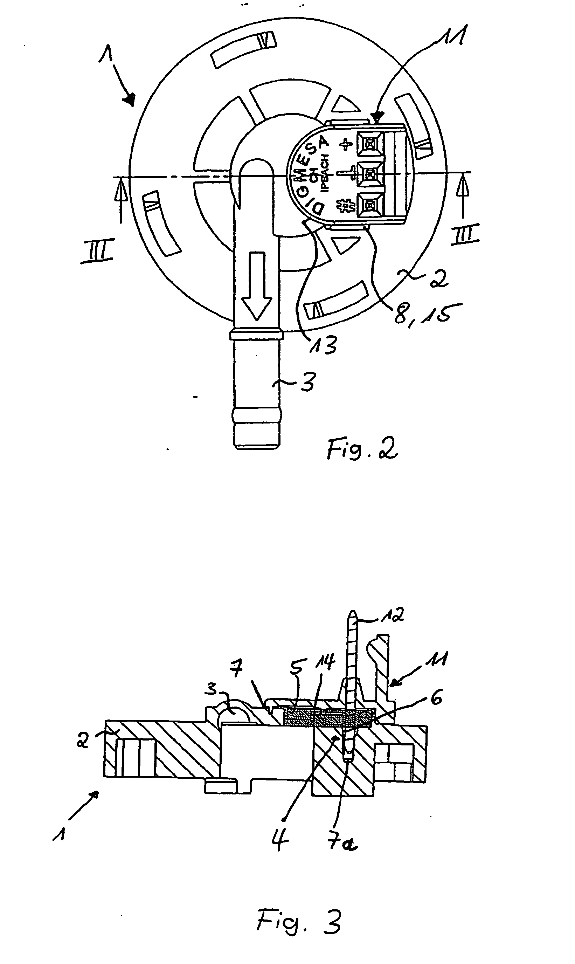

Zur vollständigen Isolierung und Abdichtung gegen eindringende Feuchtigkeit, die insbesondere Kurzschlussbrücken im Bereich der Verbindungslitzen 6 bedingen könnte, ist der Raum zwischen dem Bereich 4 und dem Deckteil 11 durch eine elektrisch isolierende elastische Masse abgedichtet, die in der Fig. 3 liniert dargestellt ist. Hierbei handelt es sich vorzugsweise um in fließfähiger oder zähflüssiger Form eingebrachtes und nach Aufstecken des Steckerteils mit den Steckstiften 12 ausgehärtetes Silikon.

Durch die isolierende elastische Masse 14 wird ein sicherer Schutz des Sensors 5, der Litzen 6 sowie der Kontaktstifte (letztere im Inneren des Sensorträgers) gegen eindringende Feuchtigkeit gewährleistet.

Der Verfahrensablauf zur Herstellung des erfindungsgemäßen Sensorträgers beinhaltet nach Spritzen des Deckteils 2 das Aufsetzen des Sensorträgers 5 mit seinen Verbindungslitzen 6 und unter Einbringen der Enden derselben in die Vertiefungen 7a des Deckteils 2. Anschließend wird die isolierende Masse 14 in fließfähigen oder zähflüssigen Zustand in dem Bereich 4 des Deckteils 2 derart aufgebracht, dass die Masse sowohl den Sensorträger 5 als auch die Verbindungslitzen 6 überdeckt. Anschließend wird das Steckerteil 11 mit den schon in diesen reibschlüssig eingebrachten Anschlussstiften 12 aufgesetzt und verrastet mittels der Nasen 15 am Deckteil 2. Dabei wird die zähflüssige isolierende Masse durch Verpressen verteilt und füllt in der in Fig. 3 dargestellten Weise vollständig den Zwischenraum zwischen Deckteil 2 und Steckerteil 11 im Bereich 4 aus. Anschließend erfolgt ein Aushärten der isolierenden Masse 14, woraufhin der erfindungsgemäße Sensorträger einsetzbar ist und zum Betrieb mit dem (nicht dargestellten) Unterteil des Durchflussmessers verbunden werden kann.

## Patentansprüche

1. Sensorträger mit einem Deckteil für einen Durchflussmesser, mit einem Sensor mit Verbindungslitzen und mit einem den Sensor und die Verbindungslitzen überdeckenden Steckerteil mit mit den Verbindungslitzen in Kontakt bringbaren Anschlussstiften,
**dadurch gekennzeichnet,**
- **dass** der Zwischenraum zwischen Steckerteil (11) und Deckteil (2) zumindest im Bereich der Verbindungslitzen (6) durch eine elektrisch isolierende, elastische Masse (14) abgedeckt ist,
- **dass** das Steckerteil (11) eine Nase (13) aufweist, die in eine Nut (7) des Deckteils (2) eingreift und
- **dass** Steckerteil (11) und Deckteil (2) über in Vertiefungen (8) des Deckteils (2) ein- und hinter-greifende andere Nasen (15) des Steckerteils (11) gehalten sind.

2. Sensorträger nach Anspruch 1, **dadurch gekennzeichnet, dass** der Zwischenraum zwischen Steckerteil (11) und Deckteil (2) vollständig durch die elektrisch isolierende elastische Masse (14) ausgefüllt ist.

3. Sensorträger nach Anspruch 1 oder 2, **dadurch gekennzeichnet, dass** die elektrisch isolierende elastische Masse (14) in fließfähiger oder zähflüssiger Form aufgebracht und ausgehärtet ist.

4. Sensorträger nach einem der Ansprüche 1 bis 3, **dadurch gekennzeichnet, dass** die elektrisch isolierende elastische Masse (14) Silikon ist.

5. Verfahren zum Herstellen eines Sensorträgers für einen Durchflussmesser,
**dadurch gekennzeichnet,**
- **dass** auf ein mit einem mit Verbindungslitzen versehenen Sensor versehenes Deckteil eine elektrisch isolierende Masse in fließfähiger oder zähflüssiger Form aufgebracht und anschließend ein Anschlussstifte tragendes Steckerteil unter Herstellung elektrischen Kontaktes zwischen jeweils einem der Anschlussstifte des Steckerteils und einer Anschlusslitze die elektrisch isolierende Masse überdeckend und verpressend mit dem Deckteil verbunden wird, und
- **dass** Steckerteil (11) und Deckteil zum Zusammenhalten über in Vertiefungen (8) des Deckteils (2) ein- und hintergreifende Nasen (15) des Steckteils (11) zusammengesteckt werden, wobei eine weitere Nase (13) des Steckerteils (11) in eine Nut (7) des Deckteils (2) eingreift.

6. Verfahren nach Anspruch 5, **dadurch gekennzeichnet, dass** Deckteil und Steckerteil in formschlüssigen Kontakt miteinander gebracht werden.

7. Verfahren nach Anspruch 5 oder 6, **dadurch gekennzeichnet, dass** als elektrisch isolierende Masse Silikon in fließfähiger oder zähflüssiger Form den vom Steckerteil überdeckten Bereich des Deckteils oder auf die dem Deckteil zugewandte Seite des Steckerteils aufgebracht wird.

## Claims

1. A sensor support with a cover part for a flowmeter, with a sensor with connecting strings and with a plug section overlapping the sensor and connecting strings with connection pins that can be brought into contact with the connecting slots,
**characterised in that**
- the interval between the plug section (11) and cover part (2) is covered at least in the region of the connecting strings (6) by an electrically insulating elastic material (14),
- the plug section (11) has a nose (13) which engages in a groove (7) of the cover part (2), and
- the plug section (11) and cover part (2) are retained by other noses (15) of the plug section (11) that engage in and behind recesses (8) in the cover part (2).

2. The sensor support according to Claim 1, **characterised in that** the interval between the plug section (11) and cover part (2) is completely filled by the electrically insulating elastic material (14).

3. The sensor support according to Claim 1 or 2, **characterised in that** the electrically insulating elastic material (14) is applied and hardened in flowable or viscous form.

4. The sensor support according to any one of Claims 1 to 3, **characterised in that** the electrically insulating elastic material (14) is silicon.

5. A method for manufacturing a sensor support for a flowmeter,
**characterised in that**
- an electrically insulating material is applied in liquid or viscous form to a cover part provided with a sensor provided with connecting strings, and subsequently a plug section carrying connecting pins is connected to the cover part in an overlapping and pressing the electrically isolating material, with an electrical contact made between one of the connecting pins of the plug section and a connecting string, and
- in order to retain plug section and cover part the plug section (11) and cover part are plugged into each other so that they can be retained together by means of noses (15) of the plug section (11) engaging in and behind recesses (8) in the cover part (2), wherein a further nose (13) of the plug section (11) engages in a groove (7) in the covered section (2).

6. The method according to Claim 5, **characterised in that** the cover part and plug section are brought into positive contact with each other.

7. The method according to Claim 5 or 6, **characterised in that** silicon in flowable or viscous form is applied as electrically insulating material to the region of the cover part covered by the plug section or to the side of the plug section facing the cover part.

## Revendications

1. Support de capteur avec une partie de recouvrement pour un débitmètre, avec un capteur doté de cordons de raccordement et d'une partie d'enfichage recouvrant le capteur et les cordons de raccordement avec des tiges de raccordement pouvant être amenées en contact avec les cordons de raccordement ;
**caractérisé en ce que** :
- l'espace intermédiaire prévu entre la partie d'enfichage (11) et la partie de recouvrement (2) est recouvert par une masse (14) élastique électriquement isolante, au moins dans la région des cordons de raccordement (6) ;
- la partie d'enfichage (11) comporte un bec (13) s'engrenant dans une rainure (7) de la partie de recouvrement (2) ; et
- la partie d'enfichage (11) et la partie de recouvrement (2) sont maintenues par le biais d'autres becs (15) de la partie d'enfichage (11) s'engrenant par dedans et par derrière dans des renfoncements (8) de la partie de recouvrement (2).

2. Support de capteur selon la revendication 1, **caractérisé en ce que** l'espace intermédiaire prévu entre la partie d'enfichage (11) et la partie de recouvrement (2) est totalement rempli de masse (14) élastique électriquement isolante.

3. Support de capteur selon la revendication 1 ou 2, **caractérisé en ce que** la masse (14) élastique électriquement isolante est appliquée sous forme liquide ou pâteuse et durcie.

4. Support de capteur selon l'une quelconque des revendications 1 à 3, **caractérisé en ce que** la masse (14) élastique électriquement isolante est de la silicone.

5. Procédé de fabrication d'un support de capteur pour un débitmètre,
**caractérisé en ce que** :
- une masse électriquement isolante est appliquée sous forme liquide ou pâteuse sur une partie de recouvrement pourvue d'un capteur doté de cordons de raccordement, à la suite de quoi une partie d'enfichage supportant des tiges de raccordement est reliée de façon à recouvrir et à comprimer la masse électriquement isolante avec la partie de recouvrement en établissant un contact électrique entre respectivement une des tiges de raccordement de la partie d'enfichage et un cordon de raccordement ;
- la partie d'enfichage (11) et la partie de recouvrement sont enfichées ensemble pour être maintenues ensemble par le biais de becs (15) de la partie d'enfichage (11) s'engrenant par dedans et par derrière dans les renfoncements (8) de la partie de recouvrement (2), un autre bec (13) de la partie d'enfichage (11) s'engrenant dans une rainure (7) de la partie de recouvrement (2).

6. Procédé selon la revendication 5, **caractérisé en ce que** la partie de recouvrement et la partie d'enfichage sont amenées l'une et l'autre en contact par complémentarité de formes.

7. Procédé selon la revendication 5 ou 6, **caractérisé en ce que** la masse électriquement isolante est de la silicone appliquée sous forme liquide ou pâteuse sur la zone de la partie de recouvrement recouverte par la partie d'enfichage ou sur le côté de la partie d'enfichage orienté vers la partie de recouvrement.
